# EUROPEAN PATENT APPLICATION

(11) **EP 3 731 034 A1**
(43) Date of publication of application: **28.10.2020**
(21) Application number: 19171161.3
(22) Date of filing: 25.04.2019
(51) Int. Cl.: G05B 9/03, G06F 11/20, H02J 3/38

(54) **SYSTEMS AND METHODS FOR CONTROLLING A POWER**

(71) Applicant: General Electric Technology GmbH, 5400 Baden (CH)
(72) Inventor: HAMBURGER, Alexander, Markham, Ontario L6C 0M1 (CA)
(74) Representative: Brevalex

(57) **Abstract**

Exemplary embodiments described in this disclosure can pertain to a controller apparatus that provides control signals to a power generation unit. The controller apparatus can include a first controller, a second controller, and a supervisor that can place the first controller in an in-service state and the second controller in a standby state. The first controller provides control signals to the power generation unit when in the in-service state. The second controller can include a copy of an application program contained in the first controller. This copy of the application program can be modified or replaced while the second controller is in the standby state. The supervisor may then opt to place the second controller in the in-service state and place the first controller in the standby state. The switch-over of controllers is carried out in a substantially simultaneous manner that eliminates interruption in control operations.

## Description

### FIELD OF THE DISCLOSURE

This disclosure generally relates to controller systems, and more particularly, to controller systems and methods for controlling a physical asset such as a power generation unit.

### BACKGROUND OF THE DISCLOSURE

Electric power is typically generated in a power plant by using one or more power generation units. A typical power generation unit can include a compressor that provides pressurized air to a combustor where the pressurized air is mixed with fuel and ignited for producing hot combustion gases. The hot combustion gases flow downstream from the combustor and into a turbine where energy is extracted from the hot combustion gases in order to rotate rotor blades that are attached to a shaft. The rotation of the shaft can be used to generate electricity in an electric generator and the generated electricity coupled into an electric grid for distribution to customers.

Interruption in the distribution of electricity to customers, particularly any interruption as a result of a malfunction or poor performance of the power generation unit, can be expensive and frustrating for customers. Consequently, great care is taken to ensure reliability and efficiency in the power generation unit and in a controller that controls the power generation unit. Towards this end, the hardware and the software used in the controller is often designed more towards robustness such as to enable the controller to provide reliable and continuous operation for many years.

However, it may be desirable at times to replace, upgrade, or repair, some of the existing software in a controller prior to a scheduled maintenance shutdown. Some traditional solutions entail powering down the controller in order to do so, thus introducing various risks such as for example, a malfunctioning of the power generation unit or sub-optimal performance of the power generation unit while the controller is shut down.

### BRIEF DESCRIPTION OF THE DISCLOSURE

Embodiments of the disclosure are directed generally to systems and methods for providing control signals to a physical asset such as a power generation unit.

According to one exemplary embodiment of the disclosure, a method can include generating a sensor signal based on sensing at least one operating condition of a physical asset; utilizing an analog-to-digital converter to generate a first digitized sensor signal sample of the sensor signal; receiving the first digitized sensor signal sample in a controller apparatus; executing a first application program in the controller apparatus to generate a first control signal based at least in part on processing the first digitized sensor signal sample; placing the first application program in an in-service state to allow transmission of the first control signal by the first application program to the physical asset; utilizing the first application program to transmit the first control signal to the physical asset; executing a second application program to generate the first control signal based at least in part on processing the first digitized sensor signal sample; placing the second application program in a standby state to prevent transmission of the first control signal by the second application program to the physical asset; receiving a first interrupt signal from the analog-to-digital converter; and responding to the first interrupt signal, at least in part, by placing the first application program in the standby state and placing the second application program in the in-service state.

According to another exemplary embodiment of the disclosure, a method can include generating a sensor signal based on sensing at least one operating condition of a physical asset; utilizing an analog-to-digital converter to generate digitized sensor signal samples of the sensor signal; receiving the digitized sensor signal samples in a controller apparatus; executing a first application program in the controller apparatus to generate one or more control signals based at least in part on processing the digitized sensor signal samples; placing the first application program in an in-service state to allow transmission of the one or more control signals by the first application program to the physical asset; executing a second application program in the controller apparatus to generate the one or more control signals based at least in part on processing the digitized sensor signal samples; placing the second application program in a standby state to prevent transmission of the one or more control signals by the second application program to the physical asset; and placing the first application program in the standby state and placing the second application program in the in-service state in a first time period that is less than one clock cycle of a sampling clock utilized by the analog-to-digital converter.

According to yet another exemplary embodiment of the disclosure, a system can include a power generation unit, at least one sensor, an analog-to-digital converter, and a controller apparatus. The sensor(s) are configured to sense at least one operating condition of the power generation unit and generate a first sensor signal indicative of the at least one operating condition of the power generation unit. The analog-to-digital converter is configured to receive the first sensor signal from the at least one sensor and generate digitized sensor signal samples by using a sampling clock. The controller apparatus can include an input interface configured to receive the digitized sensor signal samples; an output interface configured to propagate one or more control signals to the power generation unit; a memory configured to store a first application program and a second application program; and a processor operable to access the memory and execute operations such as placing the first application program in an in-service state; executing the first application program to generate at least a first control signal by processing the digitized sensor signal samples; placing the second application program in a standby state; executing the second application program to generate at least the first control signal by processing the digitized sensor signal samples; receiving a first interrupt signal from the analog-to-digital converter; and responding to the first interrupt signal, at least in part, by placing the first application program in the standby state and placing the second application program in the in-service state.

Other embodiments and aspects of the disclosure will become apparent from the following description taken in conjunction with the following drawings.

### BRIEF DESCRIPTION OF THE DRAWINGS

Having thus described the disclosure in general terms, reference will now be made to the accompanying drawings, which are not drawn to scale, and wherein:
FIG. 1 illustrates an exemplary system that includes a controller apparatus for controlling a power generation unit in accordance with an exemplary embodiment of the disclosure.
FIG. 2 illustrates some exemplary components that can be included in the controller apparatus shown in FIG. 1.
FIG. 3 shows an exemplary waveform indicating sampling instants defined by a sampling clock coupled into an analog-to-digital converter that can be a part of the exemplary system shown in FIG. 1.
FIG. 4 shows an exemplary configuration for describing a switch-over operation between two controllers in accordance with an exemplary embodiment of the disclosure.
FIG. 5 shows an exemplary configuration for executing an interrupt service routine after the switch-over operations described above with reference to FIG. 4.

The disclosure will be described more fully hereinafter with reference to the drawings, in which exemplary embodiments of the disclosure are shown. This disclosure may, however, be embodied in many different forms and should not be construed as limited to the exemplary embodiments set forth herein; rather, these embodiments are provided so that this disclosure will satisfy applicable legal requirements. Like numbers refer to like elements throughout. It should be understood that certain words and terms are used herein solely for convenience and such words and terms should be interpreted as referring to various objects and actions that are generally understood in various forms and equivalencies by persons of ordinary skill in the art. For example, the word "link" as used herein generally refers to various types of elements used for conveying signals and/or data from one device to another, such as a single wire, a set of wires (a bus), or a wireless link. Furthermore, the word "example" as used herein is intended to be non-exclusionary and non-limiting in nature. More particularly, the word "exemplary" as used herein indicates one among several examples, and it should be understood that no undue emphasis or preference is being directed to the particular example being described.

### DETAILED DESCRIPTION

In terms of a general overview, certain embodiments described in this disclosure pertain to a system having a controller apparatus for controlling a physical asset such as a power generation unit. For purposes of description, the physical asset will be referred to herein as a power generation unit. It should however be understood that the systems and methods disclosed herein can be applied to a wide variety of physical assets and are not limited to a power generation unit. For example, a physical asset can be an electric power generation unit, an electrical transformer, an electric motor, or an electric power transmission line. One technical effect of certain embodiments of the disclosure is that switch-over of controllers can be carried out in a manner that minimizes or otherwise reduces any interruption in control operations. Further, another technical effect of certain embodiments of the disclosure is that modification or replacement of various application programs may be carried out for various reasons such as for revising the application program to address software bugs, updating the application program to provide additional features, or replacing the application program with an updated or newer application program.

In one exemplary embodiment, the controller apparatus can include a first controller and a second controller and can further include a supervisor that supervises various operations of the two controllers. For example, the supervisor can place the first controller in an in-service state and the second controller in a standby state. An application program contained in the first controller is operative to provide control signals to the power generation unit when the first controller has been placed in the in-service state. Another application program contained in the second controller that is in the standby state can be a copy of the application program contained in the first controller. This copy of the application program can be modified or replaced while the second controller is in the standby state. The modification or replacement may be carried out for various reasons such as for revising the application program to address software bugs, updating the application program to provide additional features, or replacing the application program with an updated or newer application program.

The second controller may inform the supervisor once the modification of the application program has been completed. The supervisor may then opt to place the second controller in the in-service state and the first controller in the standby state for various reasons. In a traditional system, this operation may require taking the first controller off-line before placing the second controller in the in-service state. During this time, the power generation unit would be left in an uncontrolled state that can lead to various types of problems. Consequently, in accordance with the disclosure, the switch-over of controllers is carried out in a manner that minimizes or otherwise reduces any interruption in control operations.

In one exemplary implementation in accordance with the disclosure, the supervisor may place the second controller in the in-service state and the first controller in the standby state in response to receiving a trigger signal from an analog-to-digital converter. The trigger signal is operative as an interrupt that is acted upon by the supervisor for initiating the switch-over. Here again, the switch-over of controllers is carried out in a manner that minimizes or otherwise reduces any interruption in control operations.

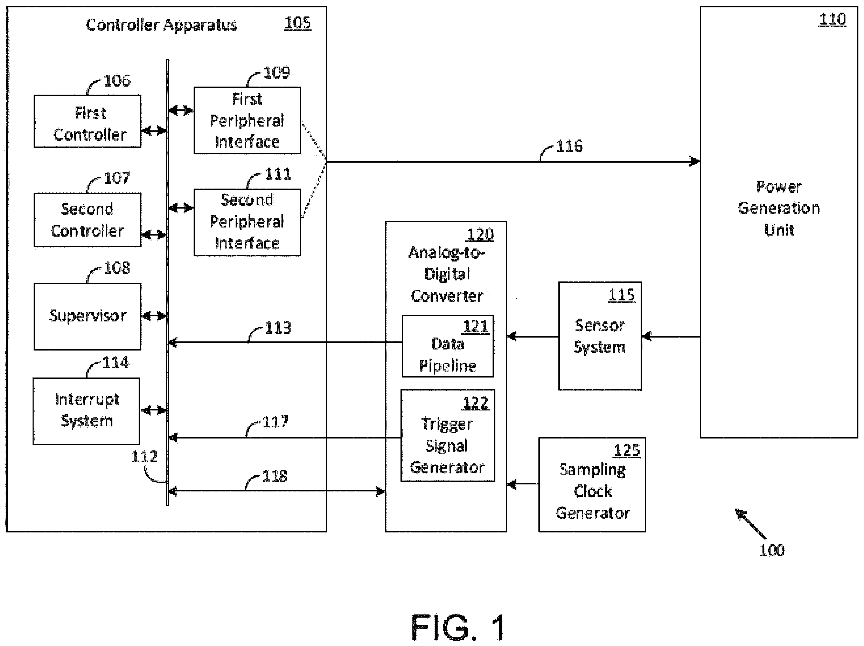

FIG. 1 illustrates an exemplary system **100** that can include a controller apparatus **105** for controlling a power generation unit **110** in accordance with an exemplary embodiment of the disclosure. The system **100** can also include a sensor system **115**, an analog-to-digital converter (ADC) **120**, and a sampling clock generator **125**. A communication link **116** may be utilized by the controller apparatus **105** to provide control signals to the power generation unit **110**.

Various components that may be coupled to, or be a part of, the power generation unit **110** are neither shown nor described herein in order to avoid distracting from certain aspects that are more directly pertinent to the disclosure. Such components can include one or more high-power controllers that receive the control signals provided by the controller apparatus **105** at logic level voltages (0V and +5V, for example) and translates these logic level voltages into larger amplitude voltages that are suitable for operating devices such as switches, relays, pumps, and motors of the power generation unit **110**.

The sensor system **115** may include one or more sensors that are used to monitor various operating conditions of the power generation unit **110**. For example, a temperature sensor may be used to monitor the temperature of a portion of the power generation unit **110**, a pressure sensor may be used to monitor the pressure inside a combustor portion of the power generation unit **110**, and a tachometer or accelerometer for monitoring the rotation speed of a rotary shaft of the power generation unit **110**. Typically, the sensor system **115** outputs one or more analog sensor signals that represent one or more monitored operating conditions.

The analog sensor signal(s) may be coupled into the analog-to-digital converter **120**, which can use a sampling clock to sample the analog sensor signal(s) and produce digitized sensor signal samples. Each digitized sensor signal sample can be indicative of an amplitude of an analog sensor signal at the various sampling instants defined by, for example, the sampling clock and provided by the sampling clock generator 125.

In accordance with one exemplary implementation of the disclosure, the analog-to-digital converter **120** may use a transition edge of the sampling clock for sampling the analog sensor signal. Consequently, each digitized sensor signal sample is produced in correspondence with a transition edge of the sampling clock. In accordance with another exemplary implementation of the disclosure, the analog-to-digital converter **120** may use a logic level of the sampling clock for sampling the analog sensor signal. Consequently, each digitized sensor signal sample is produced in correspondence with a high logic level of the sampling clock, for example. The analog-to-digital converter **120** can also include a data pipeline **121** and a trigger signal generator **122**. The data pipeline, which can be implemented by using a first-in-first-out memory chip, which, for example, may be used for storing digitized sensor signal samples. The trigger signal generator **122** may be used for generating a trigger signal when the data pipeline **121** is full and the digitized sensor signal samples stored in the data pipeline **121** are ready for use by the controller apparatus **105**.

The digitized sensor signal samples may be coupled into a bus **112** in the controller apparatus **105** by using a link **113**. The trigger signal may be coupled into the bus **112** in the controller apparatus **105** by using another link **117**. A bi-directional communication link **118** may be used for transferring various types of signals such as hand shake signals, between the analog-to-digital converter **120** and the controller apparatus **105**. In some implementations, one or both of the link **113** and the link **117** may be configured for carrying bi-directional traffic and used in addition to, or in lieu of, the bi-directional communication link **118**.

The controller apparatus **105** can include various components such as a first controller **106**, a second controller **107**, a supervisor **108**, a first peripheral interface **109**, a second peripheral interface **111**, and an interrupt system **114**. It should be understood that the various components of the controller apparatus **105** can be implemented in in hardware, software, firmware, or combinations thereof. The supervisor **108** controls certain operations of the first controller **106** and the second controller **107** such as placing one of the two controllers in an in-service state and the other in a standby state. The supervisor **108** may also control certain operations of the first peripheral interface **109** and the second peripheral interface **111**.

In accordance with an exemplary method of operation of the controller apparatus **105**, the supervisor **108** may place the first controller **106** in the in-service state and the second controller **107** in the standby state. The supervisor **108** can wait for a trigger signal from the trigger signal generator **122** in the analog-to-digital converter **120**. The analog-to-digital converter **120** may generate the trigger signal to indicate to the controller apparatus **105**, a change in an operating condition of the power generation unit **110**. The trigger signal can be provided in the form of an alert signal with varying levels of priority (low level alert, high level alert, or critical level alert, for example) and the supervisor **108** may determine what action(s) to take based on the trigger signal.

In an exemplary implementation in accordance with the disclosure, the controller apparatus **105** is configured to utilize the trigger signal as an interrupt signal. Accordingly, the interrupt signal may be serviced by utilizing an interrupt system **114** in the controller apparatus **105**. Each of the first controller **106** and the second controller **107** can provide information pertaining to an interrupt vector table that may be used by the supervisor **108** to configure the interrupt system **114**. The interrupt vector table can include a list of procedure entrance addresses that are utilized for executing routines for various types of interrupts such as for example, a "reset" interrupt, a "timer" interrupt, an "ADC ready" interrupt, a "serial port input ready" interrupt, a "serial port output ready" interrupt, and a "watchdog timer" interrupt. One or more of these types of interrupts may be originated by the analog-to-digital converter **120** and propagated to the controller apparatus **105** via the line **117** and/or the bi-directional communication link **118**.

Each of the first controller **106** and the second controller **107** may also provide to the supervisor **108**, prioritization level information and interrupt service routines for the various instances associated with the procedure entrance addresses in the interrupt vector table. The various instances can include instantiation of an in-service state for one of the first controller **106** or the second controller **107**.

The supervisor **108** can be used to execute various operations such as placing the first controller **106** in the in-service state and allowing the first controller **106** to propagate control signals to the power generation unit **110** through the first peripheral interface **109**. The supervisor **108** may perform this operation by providing an enable signal to an output enable terminal of the first peripheral interface **109** and configuring the first controller **106** to use the first peripheral interface **109**. The supervisor **108** may concurrently prevent the second controller **107**, which is in the standby state, from propagating control signals to the power generation unit **110**.

The supervisor **108** can subsequently be used to execute a switch-over operation for placing the first controller **106** in the standby state and the second controller **107** in the in-service state. The supervisor **108** may then allow the second controller **107** to propagate control signals to the power generation unit **110** through the second peripheral interface **111**. The supervisor **108** may perform this operation by providing an enable signal to an output enable terminal of the second peripheral interface **111** and configuring the second controller **107** to use the second peripheral interface **111**. The supervisor **108** may concurrently prevent the first controller from propagating control signals to the power generation unit **110**.

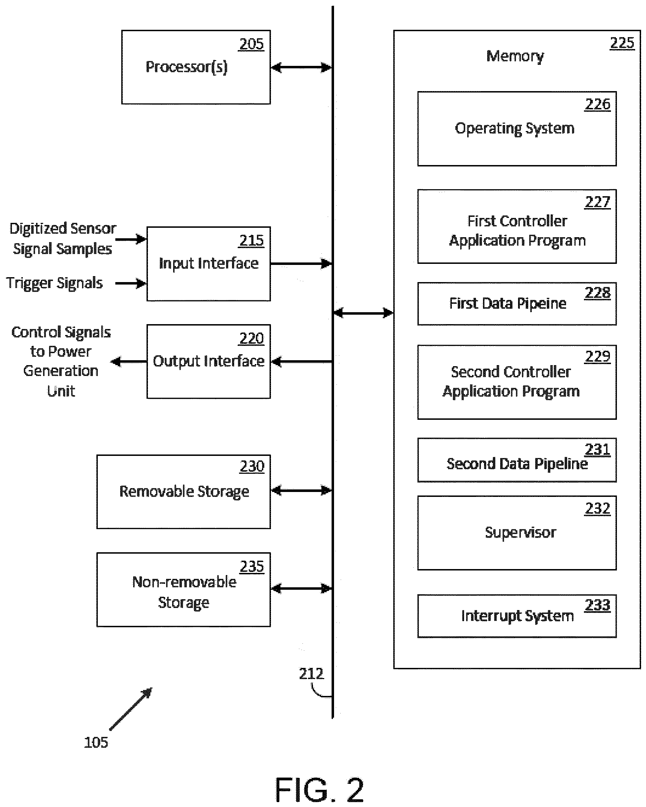

FIG. 2 illustrates some exemplary components that may be included in the controller apparatus **105** in accordance with certain embodiments of the disclosure. The exemplary components can include a processor **205** capable of communicating with a memory **225**. The processor **205** may be implemented as appropriate in hardware, software, firmware, or combinations thereof. Software or firmware implementations of the processor **205** may include computer-executable or machine-executable instructions written in any suitable programming language to perform the various functions described. In one embodiment, instructions associated with a function block language may be stored in the memory **225** and executed by the processor **205**.

The memory **225** may store program instructions that are loadable and executable on the processor **205**, as well as data generated during the execution of these programs. Depending on the configuration and type of the controller apparatus **105**, the memory **225** may be volatile (such as random-access memory (RAM)) and/or non-volatile (such as read-only memory (ROM), flash memory, etc.). In some embodiments, the controller apparatus **105** may also include additional removable storage **230** and/or non-removable storage **235** including, but not limited to, magnetic storage, optical disks, and/or tape storage. The memory **225** and associated computer-readable media may provide non-volatile storage of computer-readable instructions, data structures, program modules, and other data for the devices. In some implementations, the memory **225** may include multiple different types of memory, such as static random-access memory (SRAM), dynamic random-access memory (DRAM), or ROM.

The memory **225**, removable storage **230**, and non-removable storage **235** are all examples of non-transitory computer-readable storage media. Non-transitory computer-readable storage media may include volatile and non-volatile, removable and non-removable media implemented in any method or technology for storage of information such as computer-readable instructions, data structures, program modules or other data. Additional types of non-transitory computer storage media that may be present include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile discs (DVD) or other optical storage, magnetic cassettes, magnetic tapes, magnetic disk storage or other magnetic storage devices, or any other medium which can be used to store the desired information and which can be accessed by the devices. Combinations of any of the above should also be included within the scope of non-transitory computer-readable media.

The controller apparatus **105** may also include an input interface **215** that receives input signals such as a trigger signal generated by the trigger signal generator **122** in the analog-to-digital converter **120** and digitized sensor signal samples produced by the analog-to-digital converter **120**. The controller apparatus **105** may further include an output interface **220** for providing control signals to the power generation unit **110** via the communication link **116**.

Turning to the contents of the memory **225**, the memory **225** may include, but is not limited to, an operating system (OS) **226**, a first controller application program **227**, a first data pipeline **228**, a second controller application program **229**, a second data pipeline **231**, a supervisor **232**, and an interrupt system **233**. In this exemplary embodiment, the first controller application program **227** is a software program that implements at least some of the functions described above with reference to the first controller **106**; the second controller application program **229** is a software program that implements at least some of the functions described above with reference to the second controller **107**; and the supervisor **232** is a software program that implements at least some of the functions described above with reference to the supervisor **108**.

Some other functions of the first controller **106**, the second controller **107**, and/or the supervisor **108**, may be implemented in hardware that is not shown in FIG. 2. For example, the functionality of the supervisor **108** in terms of enabling the first peripheral interface **109** and/or the second peripheral interface **111** to propagate control signals generated by one of the first controller **106** or the second controller **107** may be implemented using hardware components that are not shown in FIG. 2. Such hardware components may include logic components such as programmable logic devices (PLDs), field-programmable gate arrays (FPGAs), and application specific integrated circuits (ASICs). The use of such logic components may offer faster switching speeds during operations such as when changing the first controller **106** or the second controller **107** from a standby state to an in-service state and vice-versa.

The first data pipeline **228** may be used by the first controller application program **227** to store digitized sensor signal samples when these samples are provided to the controller apparatus **105** by the analog-to-digital converter **120** under control of the supervisor **232**. The digitized sensor signal samples can be received in the first data pipeline **228** via the input interface **215** and the bus **212**. The bus **212** can be provided in the form of a data bus or in the form of a combined data and communications bus. The digitized sensor signal samples stored in the first data pipeline **228** may also be used by the supervisor **232** to populate the second data pipeline **231** in some implementations. The second data pipeline **231** may be used by the second controller application program **229** in a manner similar to that described above with respect to the first data pipeline **228**.

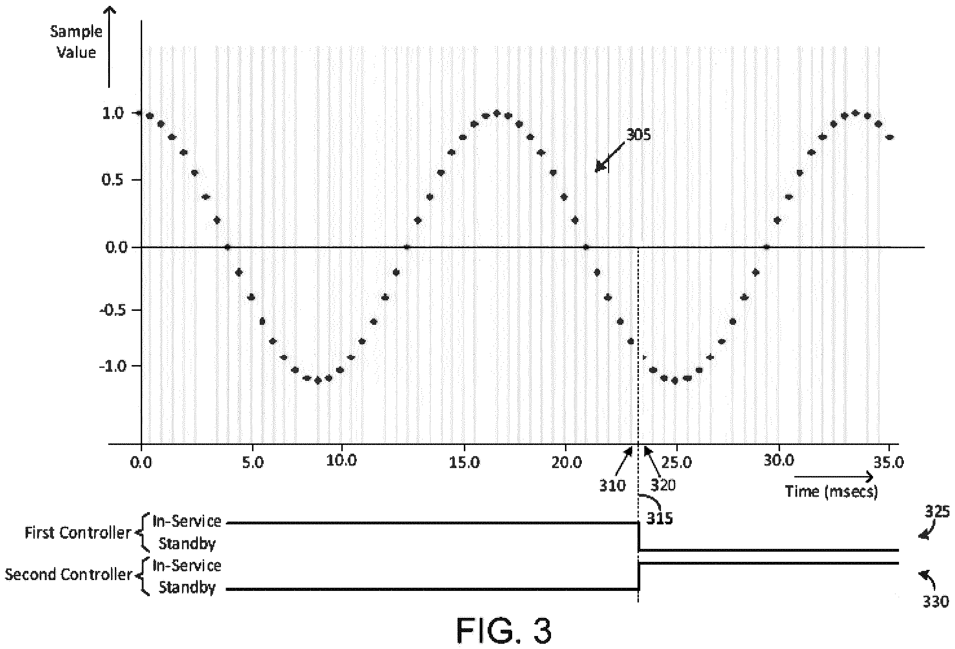

FIG. 3 shows an exemplary waveform **305** that indicates sampling instants defined by a sampling clock provided by the sampling clock generator **125** to the analog-to-digital converter **120**, according to an embodiment of the disclosure. The exemplary waveform **305**, which has a sinusoidal shape, represents an analog sensor signal generated by the sensor system **115** and provided to the analog-to-digital converter **120**. In other embodiments, the waveform **305** can have other shapes that are indicative of changes in various types of operating conditions in the power generation unit **110**.

The waveform **305** is sampled in the analog-to-digital converter **120** by using the sampling clock provided by the sampling clock generator **125**. In one exemplary implementation in accordance with an embodiment of the disclosure, a cycle period of the sampling clock is about 1 msec, which translates to about 1 KHz sampling rate. Attention is drawn to a first sampling instant **310** and a neighboring second sampling instant **320** that correspond to one cycle of the sampling clock. Dashed line **315** is indicative of an interrupt signal that is generated by the analog-to-digital converter **120** during this clock cycle.

Waveform **325** represents an in-service state of the first controller **106** for a first period of time prior to the occurrence of the interrupt signal and a standby state for a second period of time after the occurrence of the interrupt signal. The supervisor **108** responds to receiving the interrupt signal by placing the second controller **107** in the in-service state and the first controller **106** in the standby state. Accordingly, waveform **330** represents a standby state of the second controller **107** for the first period of time prior to the occurrence of the interrupt signal and an in-service state for the second period of time after the occurrence of the interrupt signal.

The switch-over operation takes place in a substantially simultaneous manner and within one clock cycle defined by the neighboring sampling instants **310** and **320**. In one exemplary implementation in accordance with an embodiment of the disclosure, the transition time between placing the first controller application program **227** in the standby state and placing the second controller application program **229** in the in-service state is less than about 10 µsecs. Such a fast and near simultaneous switch-over is in contrast to traditional systems where an active controller is taken off line first prior to a standby controller taking over, thereby leaving a power generation unit without controls for a significant period of time.

In contrast to the waveform **325** shown wherein the first controller application program **227** transitions directly from the in-service state to the stand-by state, in some other implementations, the first controller application program **227** may transition from the in-service state to the stand-by state by going through one or more intermediate states. For example, the first controller application program **227** may transition from the in-service state to the standby state after undergoing a sequence of intermediate states such as a standby state, a stopped state, a reprogram state (during which the first controller application program **227** may be revised or replaced), and a warm-up state.

The second controller application program **229** may also transition from the standby state to the in-service state by going through one or more intermediate states. For example, the second controller application program **229** may transition from the standby state to the in-service state after undergoing a sequence of intermediate states such as a stopped state, a reprogram state (during which the second controller application program **229** may be revised or replaced), a warm-up state, and the stand-by state. This sequence of intermediate states may be used to ensure that the second controller application program **229** is up-to-date with the latest revisions and/or updates prior to entering the in-service state.

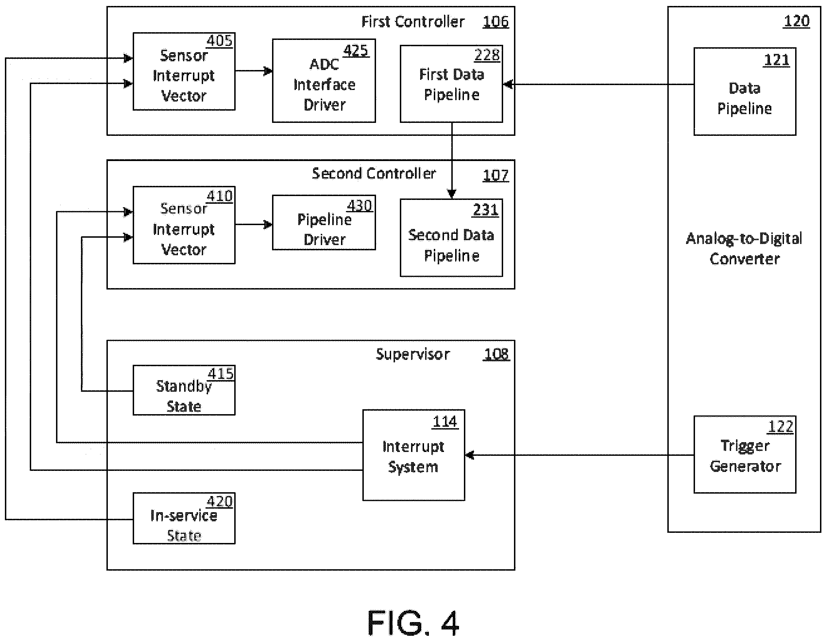

FIG. 4 shows an exemplary configuration for describing a switch-over operation between two controllers in accordance with an exemplary embodiment of the disclosure. The exemplary configuration may include the first controller **106**, the second controller **107**, the supervisor **108**, and the analog-to-digital converter **120** interconnected to each other for executing a switch-over operation in accordance with the disclosure. The following sequence of operations describe a first interrupt service routine that is executed prior to a switch-over event. The switch-over event takes place at the timing instant indicated by the dashed line **315** in FIG. 3.

The first interrupt service routine may include operations such as the analog-to-digital converter **120** filling the first data pipeline **228** in the first controller **106** with digitized sensor signal samples, followed by sending a trigger signal from the trigger signal generator **122** to the supervisor **108**. In this example embodiment, the trigger signal is an interrupt signal that is received in the interrupt system **114** (shown in FIG. 2). The interrupt system **114** then initiates a first interrupt handling procedure that calls a sensor interrupt vector **405** in the first controller application program **227** (shown in FIG. 2). The first controller application program **227**, which is executed by the first controller **106**, communicates with the supervisor **108** and confirms that the first controller **106** is in an in-service state **420**. Upon receiving confirmation, the first controller **106** configures the ADC interface driver **425** to interact with the analog-to-digital converter **120**, which can include copying the digitized sensor signal samples from the data pipeline **121** into the first data pipeline **228** and schedule the operating system **226** (shown in FIG. 2) to process the digitized sensor signal samples copied into the first data pipeline **228**.

The interrupt system **114** then calls a sensor interrupt vector **410** in the second controller application program **229** (shown in FIG. 2). The second controller application program **229**, which is executed by the second controller **107**, communicates with the supervisor **108** and confirms that the second controller **107** is in the standby state **415**. Upon receiving confirmation, the second controller **107** configures the pipeline driver **430** to copy the digitized sensor signal samples stored in the first data pipeline **228** into the second data pipeline **231** and schedule the operating system **226** (shown in FIG. 2) to process the digitized sensor signal samples copied into the second data pipeline **231**.

The interrupt system **114** then communicates with the supervisor **108** to determine if a switch-over operation is to be carried out. Upon determining that a switch-over operation is to be carried out, the first controller **106** is placed in a stand-by state and the second controller **107** is placed in an in-service state at the timing instant indicated by the dashed line **315** in FIG. 3.

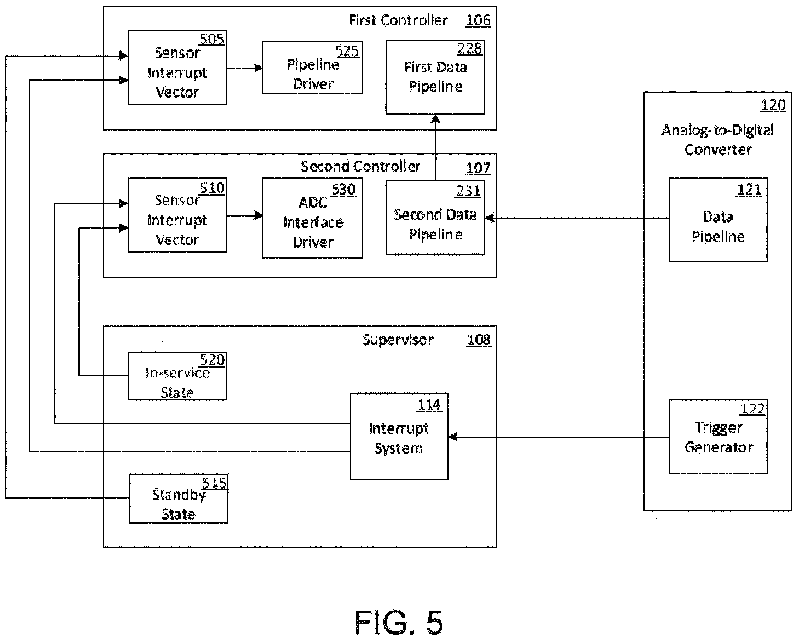

FIG. 5 shows an exemplary configuration, in accordance with an exemplary embodiment of the disclosure, for executing a second interrupt service routine after the switch-over operations described above with reference to FIG. 4. The operations described above can be substantially replicated with the second controller **107** now in the in-service state and the first controller **106** in the stand-by state. The second controller application program **229** in the second controller **107** may now be a revised version of the second controller application program **229**.

The second interrupt service routine may include operations such as the analog-to-digital converter **120** filling the second data pipeline **231** in the second controller **107** with digitized sensor signal samples and sending a trigger signal from the trigger signal generator **122** to the supervisor **108**. The trigger signal can be another interrupt signal that is received in the interrupt system **114**. The interrupt system **114** initiates a second interrupt handling procedure that calls a sensor interrupt vector **510** in the revised version of the second controller application program **229** in the second controller **107**. The revised version of the second controller application program **229** communicates with the supervisor **108** and confirms that the second controller **107** is in an in-service state **520**. Upon receiving confirmation, the second controller **107** configures the ADC interface driver **530** to interact with the analog-to-digital converter **120**, which can include copying the digitized sensor signal samples from the data pipeline **121** into the second data pipeline **231** and utilizing the operating system **226** (shown in FIG. 2) to schedule processing of the digitized sensor signal samples copied into the second data pipeline **231**.

The interrupt system **114** then calls a sensor interrupt vector **505** in the first controller application program **227** (shown in FIG. 2). The first controller application program **227** communicates with the supervisor **108** and confirms that the first controller **106** is in the standby state **415**. Upon receiving confirmation, the first controller **106** configures the pipeline driver **525** to copy the digitized sensor signal samples stored in the second data pipeline **231** into the first data pipeline **228**, and utilize the operating system **226** (shown in FIG. 2) to schedule processing of the digitized sensor signal samples copied into the first data pipeline **228**.

Many modifications and other embodiments of the example descriptions set forth herein to which these descriptions pertain will come to mind having the benefit of the teachings presented in the foregoing descriptions and the associated drawings. Thus, it will be appreciated the disclosure may be embodied in many forms and should not be limited to the exemplary embodiments described above. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method comprising:
generating a sensor signal based on sensing at least one operating condition of a physical asset;
utilizing an analog-to-digital converter (120) to generate a first digitized sensor signal sample of the sensor signal;
receiving the first digitized sensor signal sample in a controller apparatus (105);
executing a first application program in the controller apparatus (105) to generate a first control signal based at least in part on processing the first digitized sensor signal sample;
placing the first application program in an in-service state to allow transmission of the first control signal by the first application program to the physical asset;
utilizing the first application program to transmit the first control signal to the physical asset;
executing a second application program to generate the first control signal based at least in part on processing the first digitized sensor signal sample;
placing the second application program in a standby state to prevent transmission of the first control signal by the second application program to the physical asset;
receiving a first interrupt signal from the analog-to-digital converter (120); and
responding to the first interrupt signal, at least in part, by placing the first application program in the standby state and placing the second application program in the in-service state.

2. The method of claim 1, wherein placing the first application program in the standby state and placing the second application program in the in-service state is executed within one clock cycle of a sampling clock applied to the analog-to-digital converter (120).

3. The method of claim 1, further comprising:
replacing the first application program with a revised application program when the first application program is in the standby state;
receiving a second digitized sensor signal sample in the controller apparatus (105);
executing the revised application program in the controller apparatus (105) to process the second digitized sensor signal sample and generate therefrom, a second control signal;
receiving a second interrupt signal from the analog-to-digital converter (120);
responding to the second interrupt signal, at least in part, by placing the second application program in the standby state and placing the first application program in the in-service state; and
utilizing the first application program to transmit the second control signal to the physical asset.

4. The method of claim 3, wherein each of the first interrupt signal and the second interrupt signal is propagated by the analog-to-digital converter (120) to the controller apparatus (105) during a time period between two sampling instants defined by a sampling clock applied to the analog-to-digital converter (120).

5. A method comprising:
generating a sensor signal based on sensing at least one operating condition of a physical asset;
utilizing an analog-to-digital converter to generate digitized sensor signal samples of the sensor signal;
receiving the digitized sensor signal samples in a controller apparatus;
executing a first application program in the controller apparatus to generate one or more control signals based at least in part on processing the digitized sensor signal samples;
placing the first application program in an in-service state to allow transmission of the one or more control signals by the first application program to the physical asset;
executing a second application program in the controller apparatus to generate the one or more control signals based at least in part on processing the digitized sensor signal samples;
placing the second application program in a standby state to prevent transmission of the one or more control signals by the second application program to the physical asset; and
placing the first application program in the standby state and placing the second application program in the in-service state in a first time period that is less than one clock cycle of a sampling clock utilized by the analog-to-digital converter.

6. The method of claim 5, wherein placing the first application program in the standby state and placing the second application program in the in-service state is executed in response to receiving in the controller apparatus, a first interrupt signal from the analog-to-digital converter.

7. The method of claim 6, wherein the first interrupt signal is provided by the analog-to-digital converter to the controller apparatus in-between two sampling instants defined by the sampling clock.

8. The method of claim 5, further comprising:
replacing the first application program with a revised application program when the first application program is in the standby state; and
placing the revised application program in the in-service state and placing the second application program in the standby state in a second time period that is less than the one clock cycle of the sampling clock utilized by the analog-to-digital converter.

9. The method of claim 8, wherein placing the revised application program in the in-service state and placing the second application program in the standby state is executed in response to receiving in the controller apparatus, a second interrupt signal from the analog-to-digital converter.

10. The method of claim 9, wherein the second interrupt signal is provided by the analog-to-digital converter to the controller apparatus in-between two sampling instants defined by the sampling clock.

11. A system comprising:
a power generation unit (110);
at least one sensor coupled to the power generation unit (110), the at least one sensor configured to sense at least one operating condition of the power generation unit (110) and generate a first sensor signal indicative of the at least one operating condition of the power generation unit (110);
an analog-to-digital converter (120) configured to receive the first sensor signal from the at least one sensor and generate digitized sensor signal samples by using a sampling clock; and
a controller apparatus (105) comprising:
an input interface (215) configured to receive the digitized sensor signal samples;
an output interface (220) configured to propagate one or more control signals to the power generation unit (110);
a memory (225) configured to store a first application program and a second application program; and
a processor (205) operable to access the memory (225) and execute operations comprising:
placing the first application program in an in-service state;
executing the first application program to generate at least a first control signal by processing the digitized sensor signal samples;
placing the second application program in a standby state;
executing the second application program to generate at least the first control signal by processing the digitized sensor signal samples;
receiving a first interrupt signal from the analog-to-digital converter (120); and
responding to the first interrupt signal, at least in part, by placing the first application program in the standby state and placing the second application program in the in-service state.

12. The system of claim 11, wherein placing the first application program in the standby state and placing the second application program in the in-service state is carried out in a first time period that is less than one clock cycle of the sampling clock utilized by the analog-to-digital converter (120).

13. The system of claim 12, wherein the analog-to-digital converter (120) is configured to transmit the first interrupt signal to the controller apparatus (105) during a time period between two sampling instants defined by the sampling clock utilized by the analog-to-digital converter (120).

14. The system of claim 11, wherein the controller apparatus (105) further comprises:
a first peripheral interface (109) configured to propagate the first control signal from the controller apparatus (105) to the power generation unit (110) under control of the processor (205) when the first application program in the in-service state; and
a second peripheral interface (111) configured to propagate the first control signal from the controller apparatus (105) to the power generation unit (110) under control of the processor (205) when the second application program in the in-service state.

15. The system of claim 14, wherein the processor (205) is operable to place the first peripheral interface (109) in an output disabled condition when the first application program in the standby state and to place the second peripheral interface (111) in the output disabled condition when the second application program in the standby state.
